(19) Europäisches Patentamt / European Patent Office / Office européen des brevets

(11) **EP 4 345 637 A1**

(12) **EUROPEAN PATENT APPLICATION**

(43) Date of publication:
**03.04.2024 Bulletin 2024/14**

(21) Application number: **23185822.6**

(22) Date of filing: **17.07.2023**

(51) International Patent Classification (IPC):
**G06F 15/78** $^{(2006.01)}$ **G06F 3/06** $^{(2006.01)}$

(52) Cooperative Patent Classification (CPC):
**G06F 3/0679; G06F 3/0608; G06F 3/0638;
G06F 3/0658; G06F 15/7807; G06F 15/7825;**
G06F 15/7864

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 US 202217957380**

(71) Applicant: **INTEL Corporation
Santa Clara, CA 95054 (US)**

(72) Inventors:
• **DAXER, Kenneth
Sunnyvale, 94087 (US)**
• **LANGHAMMER, Martin
Alderbury, sp53ab (GB)**
• **TUNALI, Nihat Engin
San Jose, 95118 (US)**
• **WU, Michael
Santa Clara, 95054 (US)**

(74) Representative: **Viering, Jentschura & Partner
mbB
Patent- und Rechtsanwälte
Am Brauhaus 8
01099 Dresden (DE)**

(54) **DATA COMPRESSION IN INTEGRATED DEVICE NETWORK**

(57) An integrated circuit is provided that includes compression or decompression circuitry along a datapath. An integrated circuit system may include first memory to store data, data utilization circuitry to operate on the data, and a configurable data distribution path to transfer data between the first memory and the data utilization circuitry. Compression or decompression circuitry may be disposed along the data distribution path between the first memory and the data utilization circuitry to enable the first memory to store the data in compressed form and to enable the data utilization circuitry to operate on the data in uncompressed form. The compression or decompression circuitry may use lossless sparse encoding, lossless multi-precision encoding, lossless prefix lookup table-based encoding, Huffman encoding, selective compression, or lossy compression.

FIG. 17

**Description**

BACKGROUND

The present disclosure relates generally to integrated circuits, such as field-programmable gate arrays (FPGAs). More particularly, the present disclosure relates to data compression and decompression to communicate data over a network (e.g., a network-on-chip (NOC)) of an integrated circuit.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Integrated circuits are found in a wide variety of electronic devices and are used to process data to perform numerous different functions. Some functions, such as artificial intelligence machine learning, may involve significant numbers of computations involving large quantities of data. Different portions of integrated circuits may have circuitry to perform various operations to carry out different functions of the integrated circuit. For example, one portion of an integrated circuit may perform initial processing on data, another portion of the integrated circuit may further process the data, and still another portion may store the data or transmit the data off-chip. To process the data, the data may be read from memory, processed, and the processed data may be written to the memory.

A network-on-chip (NOC) may be used to efficiently route communication between different portions of an integrated circuit or for communication between multiple integrated circuits. Some integrated circuits, such as those with programmable logic circuitry such as field programmable gate arrays (FPGAs), may be configured with a system design generated by a user or designer other than the manufacturer of the integrated circuits. As such, the system design is not known in advance by the manufacturer. A NOC may allow for system designs with circuit components located in different parts of the integrated circuit to effectively communicate. For applications such as machine learning that involve significant numbers of computations involving large quantities of data, however, it may be difficult to store and/or rapidly transfer such large quantities of data over a NOC.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Various aspects of this disclosure may be better understood upon reading the following detailed description and upon reference to the drawings in which:

FIG. 1 is a block diagram of a system for implementing circuit designs on an integrated circuit device, in accordance with an embodiment;

FIG. 2 is a block diagram of the integrated circuit device of FIG. 1, in accordance with an embodiment of the present disclosure;

FIG. 3 is a block diagram of the integrated circuit device of FIG. 1, in accordance with an embodiment of the present disclosure;

FIG. 4 is a block diagram of the integrated circuit device of FIG. 1, in accordance with an embodiment of the present disclosure;

FIG. 5 is a block diagram of the interface of FIG. 4, in accordance with an embodiment of the present disclosure;

FIG. 6 is a block diagram illustrating design entries of the micro-NOC of FIG. 3, in accordance with an embodiment of the present disclosure;

FIG. 7 is a block diagram illustrating a mapping of the micro-NOC of FIG. 3, in accordance with an embodiment of the present disclosure;

FIG. 8 is a block diagram illustrating a read operation with the micro-NOC of FIG. 3, in accordance with an embodiment of the present disclosure;

FIG. 9 is a block diagram of system using the micro-NOC with compression / decompression circuitry to more efficiently store or transmit data, in accordance with an embodiment of the present disclosure;

FIG. 10 is a block diagram of one arrangement of a system with compression / decompression circuitry to more efficiently store or transmit data between local memory and the micro-NOC, in accordance with an embodiment of the present disclosure;

FIG. 11 is a block diagram of one arrangement of a system with compression / decompression circuitry to more efficiently store or transmit data between the micro-NOC and on-chip memory, in accordance with an embodiment of the present disclosure;

FIG. 12 is a block diagram of one arrangement of a system with compression / decompression circuitry to more efficiently store or transmit data between the on-chip memory and data utilization circuitry such as a digital signal processor (DSP), in accordance with an embodiment of the present disclosure;

FIG. 13 is a block diagram showing ingress and egress ports from a network-on-chip (NOC) into programmable logic circuitry to access compression / decompression circuitry implemented in soft logic, in accordance with an embodiment of the present disclosure;

FIG. 14 is a data structure illustrating one manner of compression and decompression using lossless sparse encoding, in accordance with an embodiment of the present disclosure;

FIG. 15 is a data structure illustrating one manner of compression and decompression using lossless multiprecision encoding, in accordance with an embodiment of the present disclosure;

FIG. 16 is a block diagram illustrating one manner of compression and decompression using lossless prefix lookup table-based encoding, in accordance with an embodiment of the present disclosure;

FIG. 17 is a flowchart of a method for populating a lookup table used in lossless prefix lookup table-based encoding, in accordance with an embodiment of the present disclosure; and

FIG. 18 is a block diagram of a data processing system that includes the integrated circuit of FIG. 1, in accordance with an embodiment.

## DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As used herein, "hard logic" or "hard circuitry" generally refers to portions of an integrated circuit device (e.g., a programmable logic device) that are not programmable by an end user, and the portions of the integrated circuit device that are programmable by the end user are considered "soft logic." For example, hard logic elements in a programmable logic device such as an FPGA may include arithmetic units (e.g., digital signal processing (DSP) blocks) that are included in the FPGA, whereas soft logic includes programmable logic elements included in the FPGA.

Many use cases of an integrated circuit involve transporting large quantities of data from storage to data utilization circuitry. For example, ever-increasing artificial intelligence (AI) dataset sizes may place a considerable burden on a data distribution network, which may include routing structures such as a network-on-chip (NOC). To ease the burden of such large quantities of data, data may be compressed while in storage and decompressed at some point along the data distribution network from storage to the data utilization circuitry. Any suitable compression and decompression circuitry may be used. Suitable encoding may include lossless sparse encoding, lossless multi-precision encoding, lossless 2-bit prefix lookup table-based encoding, Huffman encoding, selective compression, as well as lossy compression.

Placing the compression and decompression circuitry in different locations along the data distribution network may provide different benefits. For example, the compression and decompression circuitry may be placed between off-chip storage and the integrated circuit having the data utilization circuitry (e.g., a memory controller for the off-chip storage on the integrated circuit), before or after a network-on-chip (NOC), between a NOC and embedded function circuitry such as embedded memory coupled to the NOC, or between the embedded memory and another embedded function circuit such as a processing element such as a digital signal processor (DSP). Indeed, multiple instances of the compression and decompression circuitry may be placed in different locations along the data distribution network and different instances of the compression and decompression circuitry may be bypassable.

Using compression and decompression circuitry along a data distribution network may be particularly useful in certain machine learning (ML) use cases. Many high-performance ML accelerators leverage on-chip cache or embedded memory and/or high bandwidth dynamic random-access memory (DRAM) to improve inference throughput. In addition, both weight and activation can be compressed to enable memory bandwidth/storage savings, effectively increasing effective on-chip storage and bandwidth. While both weight data and activation data can be compressed, there are distinctions between these two types of ML data for inference workloads. First, weights are known ahead of time and can be compressed offline. In such a case, it is possible to use only decoders. Second, activations are known at run-time. Therefore, both encoders and corresponding decoders may be used. The placement of compression and decompression circuitry within an ML hardware accelerator may result in differences in potential memory bandwidth and storage savings. The integrated circuit of this disclosure may be any suitable integrated circuit. For example, the integrated circuit may be an application-specific integrated circuit (ASIC) or may include programmable logic (e.g., field programmable gate array (FPGA) circuitry).

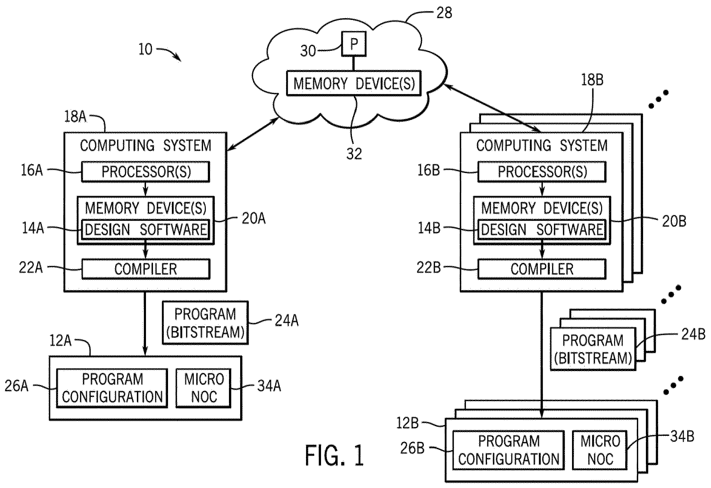

With the foregoing in mind, FIG. 1 illustrates a block diagram of a system 10 that may be used to program one or more integrated circuit device 12 (e.g., integrated circuit devices 12A, 12B) that use compression and/or decompression along a data distribution network to efficiently store and transmit data. This may be particularly effective for data processing involving large datasets, such as many machine learning (ML) use cases. The integrated circuit device 12 may be reconfigurable (e.g., FPGA) or may be an application-specific integrated circuit (ASIC). A user may implement a circuit design to be programmed onto the integrated circuit device 12 using design software 14, such as a version of Intel® Quartus® by INTEL CORPORATION.

The design software 14 may be executed by one or more processors 16 of a respective computing system 18. The computing system 18 may include any suitable device capable of executing the design software 14, such as a desktop computer, a laptop, a mobile electronic device, a server, or the like. The computing system 18 may access, configure, and/or communicate with the integrated circuit device 12. The processor(s) 16 may include multiple microprocessors, one or more other integrated circuits (e.g., ASICs, FPGAs, reduced instruction set processors, and the like), or some combination of these.

One or more memory devices 20 may store the design software 14. In addition, the memory device(s) 20 may store information related to the integrated circuit device 12, such as control software, configuration software, look up tables, configuration data, etc. In some embodiments, the processor(s) 16 and/or the memory device(s) 20 may be external to the computing system 18. The memory device(s) 20 may include a tangible, non-transitory, machine-readable-medium, such as a volatile memory (e.g., a random-access memory (RAM)) and/or a nonvolatile memory (e.g., a read-only memory (ROM)). The memory device(s) 20 may store a variety of information that may be used for various purposes. For example, the memory device(s) 20 may store machine-readable and/or processor-executable instructions (e.g., firmware or software) for the processor(s) 16 to execute, such as instructions to determine a speed of the integrated circuit device 12 or a region of the integrated circuit device 12, determine a criticality of a path of a design programmed in the integrated circuit device 12 or a region of the integrated circuit device 12, programming the design in the integrated circuit device 12 or a region of the integrated circuit device 12, and the like. The memory device(s) 20 may include one or more storage devices (e.g., nonvolatile storage devices) that may include read-only memory (ROM), flash memory, a hard drive, or any other suitable optical, magnetic, or solid-state storage medium, or any combination thereof.

The design software 14 may use a compiler 22 to generate a low-level circuit-design program 24 (bitstream), sometimes known as a program object file, which programs the integrated circuit device 12. That is, the compiler 22 may provide machine-readable instructions representative of the circuit design to the integrated circuit device 12. For example, the integrated circuit device 12 may receive one or more programs 24 as bitstreams that describe the hardware implementations that should be stored in the integrated circuit device 12. The programs 24 (bitstreams) may be programmed into the integrated circuit device 12 as a program configuration 26 (e.g., program configuration 26A, program configuration 26B).

As illustrated, the system 10 also includes a cloud computing system 28 that may be communicatively coupled to the computing systems 18, for example, via the internet or a network connection. The cloud computing system 28 may include processing circuitry 30 and one or more memory devices 32. The memory device(s) 32 may store information related to the integrated circuit device 12, such as control software, configuration software, look up tables, configuration data, etc. The memory device(s) 32 may include a tangible, non-transitory, machine-readable-medium, such as a volatile memory (e.g., a random-access memory (RAM)) and/or a nonvolatile memory (e.g., a read-only memory (ROM)). The memory device(s) 32 may store a variety of information that may be used for various purposes. For example, the memory device(s) 32 may store machine-readable and/or processor-executable instructions (e.g., firmware or software) for the processing circuitry 30 to execute. Additionally, the memory device(s) 32 of the cloud computing system 28 may include programs 24 and circuit designs previously made by designers and the computing systems 18.

The integrated circuit devices 12 may include micro networks-on-chip (micro-NOCs) 34 (collectively referring to micro-NOC(s) 34A and micro-NOC(s) 34B). For example, one or more micro-NOCs may be dispersed in the integrated circuit device 12 to enable communication throughout the integrated circuit device 12. As discussed below, the micro-NOCs 34 may be implemented using hardened fabric resources on the integrated circuit device 12 between another NOC and one or more memory blocks included on the integrated circuit device 12.

The memory device(s) 32 may also include one or more libraries of chip-specific predefined locations and fixed routes that may be utilized to generate a NOC or program a micro-NOC. When a designer is utilizing the design software 14, the processor(s) 16 may request information regarding NOCs or micro-NOCs previously designed by other designers or implemented on other integrated circuit device 12. For instance, a designer who is working on programming the integrated circuit device 12A may utilize the design software 14A and processor(s) 16A to request a design for a NOC or characteristics of a micro-NOC used on another integrated circuit (e.g., integrated circuit device 12B) from the cloud computing system 28. The processing circuitry 30 may generate and/or retrieve a design of a NOC or characteristics of micro-NOC from the memory devices(s) 32 and provide the design to the computing system 18A. Additionally, the cloud computing system 28 may provide information regarding the predefined locations and fixed routes for a NOC or micro-NOC to the computing system 18A based on the specific integrated circuit device 12A (e.g., a particular chip). Furthermore, the memory device(s) 32 may keep records and/or store designs that are used to provide NOCs and micro-NOCs with regularized structures, and the processing circuitry 30 may select specific NOCs or micro-NOCs based on the integrated circuit device 12A as well as design considerations of the designer (e.g., amounts of data to be transferred, desired speed of data transmission).

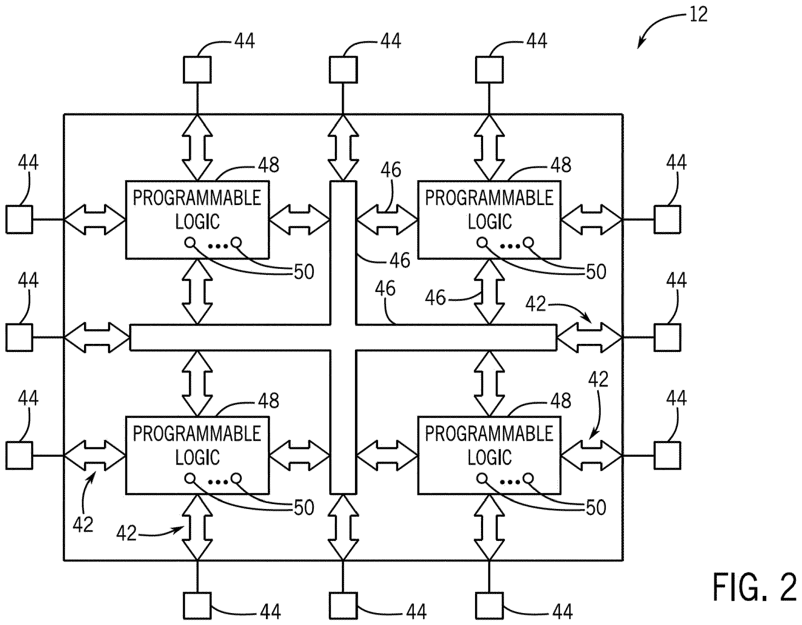

Turning now to a more detailed discussion of the integrated circuit device 12, FIG. 2 illustrates an example of the integrated circuit device 12 as a programmable logic device, such as a field-programmable gate array (FPGA). Further, it should be understood that the integrated circuit device 12 may be any other suitable type of programmable logic device (e.g., an application-specific integrated circuit and/or application-specific standard product). As shown, integrated circuit device 12 may have input/output circuitry 42 for driving signals off device and for receiving signals from other devices via input/output pins 44. Interconnection resources 46, such as global and local vertical and horizontal conductive lines and buses, may be used to route signals on integrated circuit device 12. Additionally, interconnection resources 46 may include fixed interconnects (conductive lines) and programmable interconnects (i.e., programmable connections between respective fixed interconnects). Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48.

Programmable logic devices, such as integrated circuit device 12, may contain programmable elements 50 with the programmable logic 48. For example, as discussed above, a designer (e.g., a customer) may program (e.g., configure) the programmable logic 48 to perform one or more desired functions. By way of example, some programmable logic devices may be programmed by configuring their programmable elements 50 using mask programming arrangements, which is performed during semiconductor manufacturing. Other programmable logic devices are configured after semiconductor fabrication operations have been completed, such as by using electrical programming or laser programming to program their programmable elements 50. In general, programmable elements 50 may be based on any suitable programmable technology, such as fuses, antifuses, electrically programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using pins 44 and input/output circuitry 42. In one embodiment, the memory cells may be implemented as random-access-memory (RAM) cells. The use of memory cells based on RAM technology is described herein is intended to be only one example. Further, because these RAM cells are loaded with configuration data during programming, they are sometimes referred to as configuration RAM cells (CRAM). These memory cells may each provide a corresponding static control output signal that controls the state of an associated logic component in programmable logic 48. For instance, in some embodiments, the output signals may be applied to the gates of metal-oxide-semiconductor (MOS) transistors within the programmable logic 48.

Furthermore, it should be noted that the programmable logic 48 may correspond to different portions or sectors on the integrated circuit device 12. That is, the integrated circuit device 12 may be sectorized, meaning that programmable logic resources may be distributed through a number of discrete programmable logic sectors (e.g., each programmable logic 48). In some cases, sectors may be programmed to perform specific tasks. For example, a first sector (e.g., programmable logic 48A) may perform a first operation on data. The interconnect resources 46, which may include a NOC designed using the design software 14, may be utilized to provide the data to another sector (e.g., programmable logic 48B), which may perform further operations on the data.

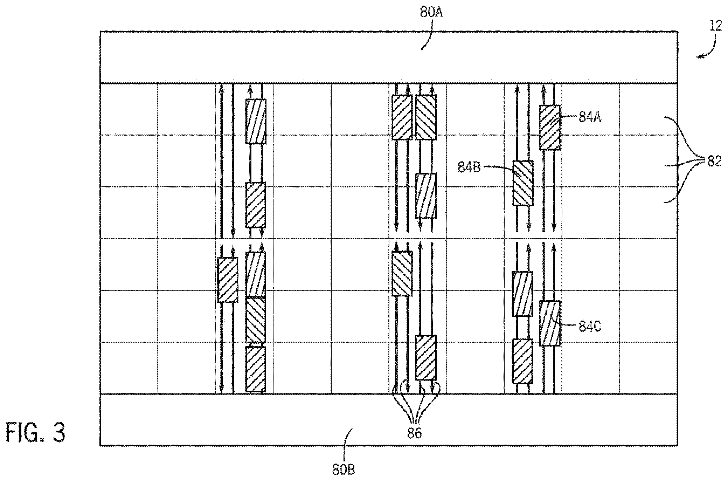

Turning now to a more detailed discussion of the integrated circuit 12, FIG. 3 shows the integrated circuit 12, including a north NOC 80A and a south NOC 80B, both of which may be hardened and provide shoreline connections throughout the integrated circuit 12. In other words, in one embodiment, the NOCs 80 (referring collectively to north NOC 80A and south NOC 80B) may be hard NOCs. In other embodiments, the NOCs 80 may be soft NOCs that are generated by the design software 14. The integrated circuit 12 may also include a fabric that may include programmable fabric 82, which may include programmable logic elements (e.g., programmable logic 48) and interconnection resources 46. The programmable fabric 82 of the fabric of the integrated circuit 12 may also have memory blocks 84 that are dispersed throughout the fabric. For example, there may be groups of memory blocks 84 such as memory blocks 84A, 84B, and 84C in the programmable fabric 82. In some embodiments, the memory blocks 84A, 84B, and 84C, as well as other memory blocks 84, may be embedded memory (e.g., M20Ks, M144Ks, or any other type of memory block or embedded memory device such as memory logic array blocks (MLABs)).

To enable enhanced communication to and from the memory blocks 84A, 84B, and 84C, the north NOC 80A and the south NOC 80B may be communicatively coupled to micro-NOCs 86. The micro-NOCs 86 are dedicated, hardened fabric resources used to communicate data between the NOCS 80A and 80B and the memory blocks 84 (for example, 84A, 84B, and 84C) in the fabric of the integrated circuit 12. In other words, the micro-NOCs 86 may be included in the integrated circuit device 12 and not physically formed based on a program design implemented on the integrated circuit 12. The integrated circuit 12 may include any suitable number of micro-NOCs 86. For example, there may be one, five, ten, fifteen, twenty, twenty-five, dozens, hundreds, or any other desired number of micro-NOCs 86 in the integrated circuit 12. The micro-NOCs 86 may be oriented in a north-to-south orientation, to enable communication from the north NOC 80A and the south NOC 80B to the memory blocks 84A, 84B, and 84C dispersed throughout the fabric along the micro-NOCs 86. However, in some embodiments there may be east and west NOCs with horizontally oriented micro-NOCs 86 to enable communication between the east and west NOCs and the memory blocks 84A, 84B, and 84C dispersed throughout the fabric of the integrated circuit device 12.

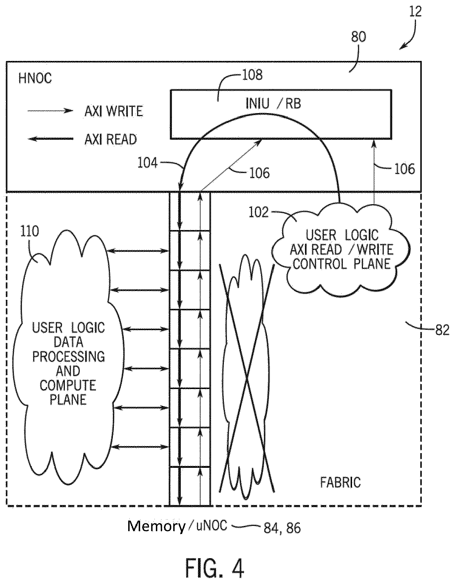

Turning now to a more detailed discussion of the communications enabled by the micro-NOCs 86, FIG. 4 is another block diagram of the integrated circuit device 12. User logic 102 (which may be implemented based on a bitstream or design generated using the design software 14) may request data be read from or written to the memory blocks 84A, 84B, and 84C. In some embodiments the user logic 102 may be implemented in the form of an advanced extensible interface (AXI) protocol. However, in some embodiments other protocols or interfaces may be used, such as the Avalon® memory-mapped (AVMM) interfaces using an AVMM protocol. The user logic 102 cause the transmission of a read signal 104 or a write signal 106 to an AXI interface 108, which may be located in a NOC 80 (e.g., north NOC 80A or south NOC 80B) of the integrated circuit 12. The AXI interface 108 may also be an interface for any other protocol, such as the AVMM protocol.

The AXI interface 108 may receive a read signal 104 from the user logic 102, and selectively transmit the signal 104 from the NOC 80 to a micro-NOC 86. The micro-NOC 86 may then deposit the read data from the read signal 104 into the memory block 84A, 84B, 84C, or any other memory block.

Additionally or alternatively, the AXI interface 108 may receive a write signal 106 from the user logic 102 and selectively transmit the signal 106 from the NOC 80 to a micro-NOC 86. The micro-NOC 86 may then deposit the read data requested in the write signal 106 from the memory block 84A, 84B, 84C, or any other memory block, and may transmit the data to the AXI interface 108.

In some embodiments, the selection of memory blocks 84A, 84B, or 84C from which to read or write can be decided at runtime. Accordingly, the micro-NOC 86 may replace fabric wires and soft logic in the fabric 82 while enabling dynamically reading and writing different memory blocks 84A, 84B, or 84C and to transport the data to and from the NOCs 80A and 80B. Further, because the micro-NOCs 86 are hardened, the micro-NOCs 86 do not compete for resources (e.g., soft logic, wires of the fabric 82) that may otherwise be utilized in the design, and the micro-NOCs 86 are also timing closed.

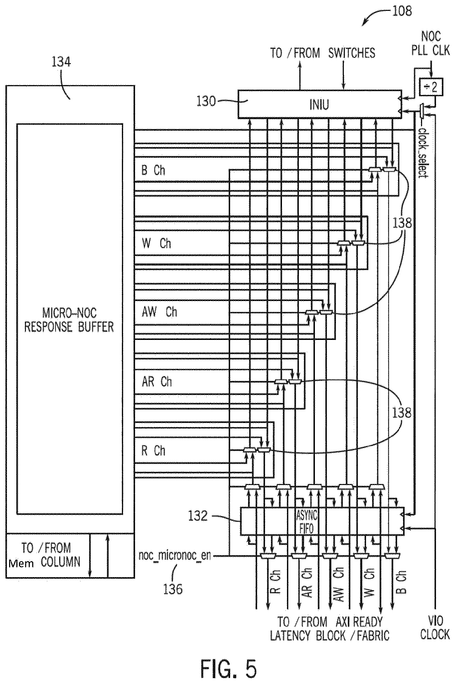

FIG. 5 illustrates a more detailed view of the AXI interface 108 relative to FIG. 4. As illustrated, the AXI interface 108 may include an initiator network interface unit (INIU) 130, a fabric AXI initiator interface 132, and a response buffer 134. In some embodiments, the INIU 130 may transmit data to the programmable fabric 82 via the fabric AXI initiator interface 132, which, when no micro-NOCs 86 are present, may use soft logic resources within the programmable fabric 82 be relay the data. The response buffer 134, in some embodiments, redirects the data to a micro-NOC 86 instead of the fabric AXI initiator interface 132. In other words, the response buffer 134 may intercept data that is transmitted from the INIU 130 to the fabric AXI initiator interface 132 or from the fabric AXI initiator to the INIU 130. Accordingly, in some embodiments, transactions targeted to/from the micro-NOCs 86 and transactions targeted to/from the programmable fabric 82 may be freely interleaved.

In some embodiments, a micro-NOC enable signal 136 may be sent to multiplexers 138 to reroute the data transmitted by the INIU 130 to the response buffer 134, instead of to the AXI initiator interface 132. In some embodiments, there may be one multiplexer 138 associated with every channel of communication between the INIU 130 and the AXI initiator 132. For example, in some embodiments there may be one, two, three, four, five, six, seven, eight, or any other suitable number of channels, each with an accompanying multiplexer 138 (or set of multiplexers 138). In some embodiments, other routing circuitry may be used to route the data toward the response buffer 134 based on the micro-NOC enable signal 136.

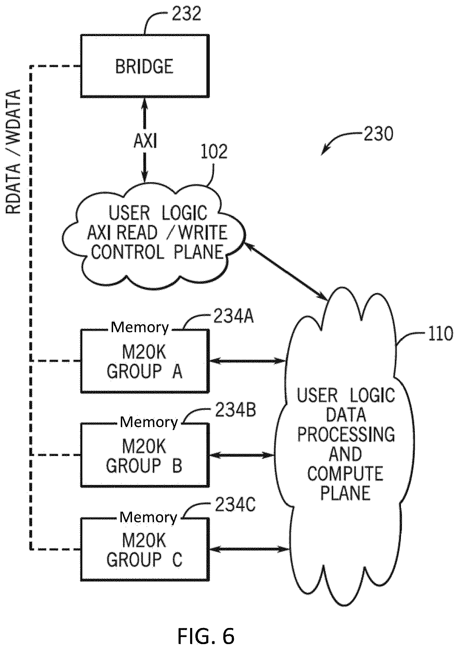

Turning now to FIG. 6, a diagram 230 illustrates a method of grouping together multiple memory blocks 84. For example, the user logic 102 or hardened circuitry may describe specific groupings for the memory blocks 84. In some embodiments, the groupings of the memory blocks 84 may be assigned during a design stage by a designer using the design software 14. Once grouped, the connection of groups of memory blocks 84 to the NOC 80A or the NOC 80B may be described as groups with AxUSER bindings. For example, when an AXI read/write uses a specified ARUSER/AWUSER, the AXI read/write may be directed to the specified group of fabric memories.

For example, the illustrated diagram 230 shows an example embodiment in which three groups of memory blocks 84 have been identified: group 234A, group 234B, and group 234C. When the user logic 102 specifies an ARUSER for a read or a write signal, the bridge 232 may direct the read or write signal to the group specified, (e.g., one or more of the groups 234A, 234B, or 234C). The group specified, may then interact with a user logic data processing and compute plane 110 on the programmable fabric 82, for example, to complete a requested read or write operation.

In some embodiments, the group 234A, 234B, or 234C, or any combination thereof, may group the memory blocks 84A, 84B, or 84C, or any other memory blocks, that are located adjacent to each other. For example, the group 234A may be a grouping of memory blocks 84, which may have sequential addresses.

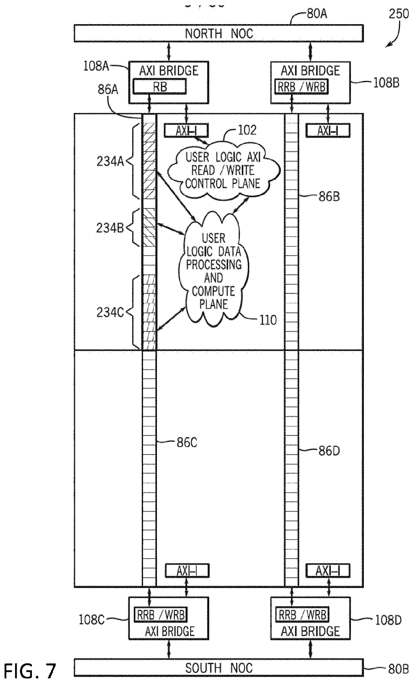

FIG. 7 is a block diagram 250 illustrating a mapping of the groups 234A, 234B, and 234C to the micro-NOC 86A. FIG. 7 also illustrates an example embodiment of the integrated circuit device 12 including the north NOC 80A, the south NOC 80B, and four micro-NOCs, 86A, 86B, 86C, and 86D dispersed in the programmable fabric 82. As illustrated, an AXI interface 108A may communicatively connect the north NOC 80A to the micro-NOC 86A, the AXI interface 108B may communicatively connect the north NOC 80A to the micro-NOC 86B, the AXI interface 108C may communicatively connect the south NOC 80B to the micro-NOC 86C, and the AXI interface 108D may communicatively connect the south NOC 80B to the micro-NOC 86D.

In some embodiments, the micro-NOCs 86 (referring collectively to micro-NOCs 86A, 86B, 86C, 86D, or any combination thereof) may map to a number of memory blocks 84. Additionally or alternatively, the micro-NOCs 86, may map to a number of groups of memory blocks 84, such as 234A, 234B, and 234C. In the illustrated example, the micro-NOC 86A is mapped to the groups 234A, 234B, and 234C. In some embodiments, other micro-NOCs 86A-D may also be mapped to additional memory blocks 84 or groups of memory blocks 84. In some embodiments, the micro-NOCs 86A-D may have eight thirty-two bit data path channels that map to eight 512x32 bit memory blocks 84 in parallel to create a 512x256 bit memory. However, the micro-NOCs 86 may not be limited to these values, and may include a larger or smaller data path to map any suitable number of memory blocks 84 to create any suitably sized memory. Additionally, narrow mapping such as a 512x128b memory may also be supported. As noted above, the design software 14 may statically map the groups 234 (referring to groups 234A, 234B, 234C, or any combination thereof). Further, as illustrated, the groups 234 may be communicatively connected to the user logic data processing and compute plane 110.

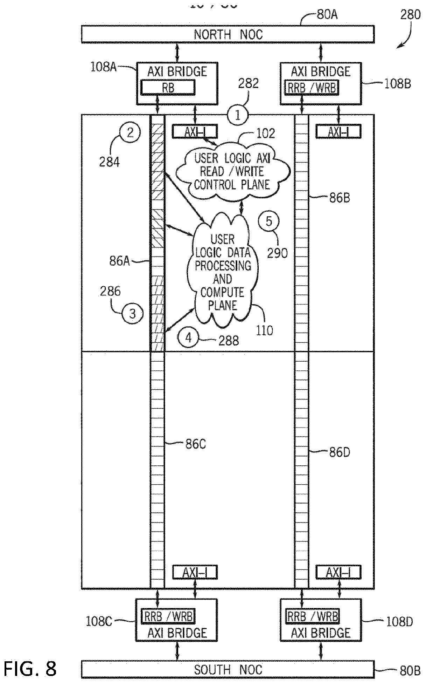

FIG. 8 is a block diagram 280 which describes several operations that may occur in the example embodiment of the integrated circuit device 12 described above with respect to FIG. 7. The operations are intended to describe an example flow of operations to accomplish a read operation from a memory block 84 via a micro-NOC 86.

In a first operation 282, a read command may be sent by the user logic 102, which may specify a group 234 of memory blocks 84 to read from, as described above. In a second operation 284, an R channel (e.g., when using the AXI protocol), or other channel of another appropriate protocol, may send RDATA, or a similar request, to a micro-NOC 86A. In a third operation 286, the micro-NOC 86A may deposit the RDATA or similar request into the group of memory blocks 84 specified by the user logic 102. In a fourth operation 288, the micro-NOC 86A may receive a signal from the group of memory blocks 84 indicating how many addresses have been read. In a fifth operation 290, the R channel may indicate completion of the read command. In some embodiments, the read response at the AXI interface 108A may pack multiple read responses to the fabric using the unused RDATA field, as described above. Further, in some embodiments, when the micro-NOC 86A is not writing to the memory blocks 84, the programmable fabric 82 may write to the memory blocks 84 through soft logic of the programmable fabric 82.

**Compression and/or Decompression Placement**

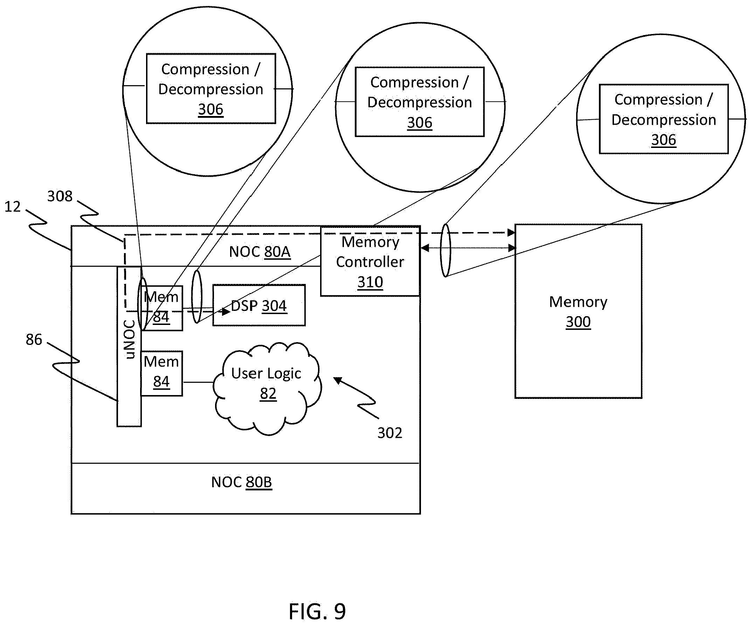

At any suitable point, data may be compressed or decompressed along a data distribution network, which may include a micro-NOC 86. For example, as shown in FIG. 9, the integrated circuit 12 may receive and send data to memory 300. The memory 300 may represent any suitable form of memory or storage (e.g., flash memory, a form of double data rate (DDR) memory such as DDR3, DDR4, or DDR5 memory; analog dynamic memory (ADM); high-bandwidth memory (HBM)). In some cases, the memory 300 may be on a second integrated circuit that is connected to the integrated circuit 12 using a 3D stacking method.

In a machine learning (ML) use case, the memory device 300 may store weights for various neural network layers and/or may store activations from calculations done by data utilization circuitry 302 (e.g., user logic in programmable logic fabric 82 and/or a digital signal processing (DSP) block 304). Data compression/decompression circuitry 306 may be disposed in one or in several areas along a data distribution network 308. Although the data compression/decompression circuitry 306 is shown as appearing in three distinct locations in the block diagram of FIG. 9, there may be more or fewer instances. For example, the data compression/decompression circuitry 306 may be found in only one location, including in a location on the data distribution network 308 that is different from the locations specifically shown in FIG. 9. Moreover, the data compression/decompression circuitry 306 may be bypassable, such that decompressed data may be passed from the memory 300 to the data utilization circuitry 302, as well. Furthermore, when multiple instances of the compression/decompression circuitry 306 are included, being bypassable may allow them to selectively compress or decompress the data in a particular location to various effect. The tradeoffs of compression and decompression in various locations along the data distribution network 308 are discussed further below.

The data compression/decompression circuitry 306 may decompress data traversing from the memory 300 through a memory controller 310 toward the data utilization circuitry 302 and may compress data from the data utilization circuitry 302 toward the memory 300. Any suitable compression scheme(s) may be used. For example, suitable encoding may include lossless sparse encoding, lossless multi-precision encoding, lossless 2-bit prefix lookup table-based encoding, Huffman encoding, selective compression, as well as lossy compression. The data compression/decompression circuitry 306 may be formed in hardened circuitry or in soft logic. For example, a user system design may specify including the compression/decompression circuitry 306 as an intellectual property (IP) block of soft logic. Moreover, in some cases, the compression/decompression circuitry 306 may only include circuitry for decompression (e.g., a decoder) or only circuitry for compression (e.g., an encoder). One use case in which using only a decoder may be particularly useful is when only artificial intelligence weights are compressed, and the use case may not call for compression back to the memory 300.

The data distribution network 308 appears in FIG. 9 as providing one particular pathway for data to travel, but the data distribution network 308 may be programmed to provide data along other paths, as well. The data distribution network 308 may include any suitable data distribution circuitry, such as the memory controller 310, the NOC 80A, the micro-NOC 86, and certain memory blocks 84. The data distribution network 308 may also provide data to or receive data from the user logic in programmable logic fabric 82. The data distribution network 308 may include more or fewer components. For example, in some cases, the data from the memory 300 may enter the memory controller 310 and traverse programmable logic routing to reach the DSP block 304, and may be decompressed at any suitable point along the way. Indeed, while the data distribution network 308 shown in FIG. 9 includes the NOC 80A and the micro-NOC 86, in some embodiments, the data distribution network 308 may include just the NOC 80A, just the micro-NOC 86, or neither.

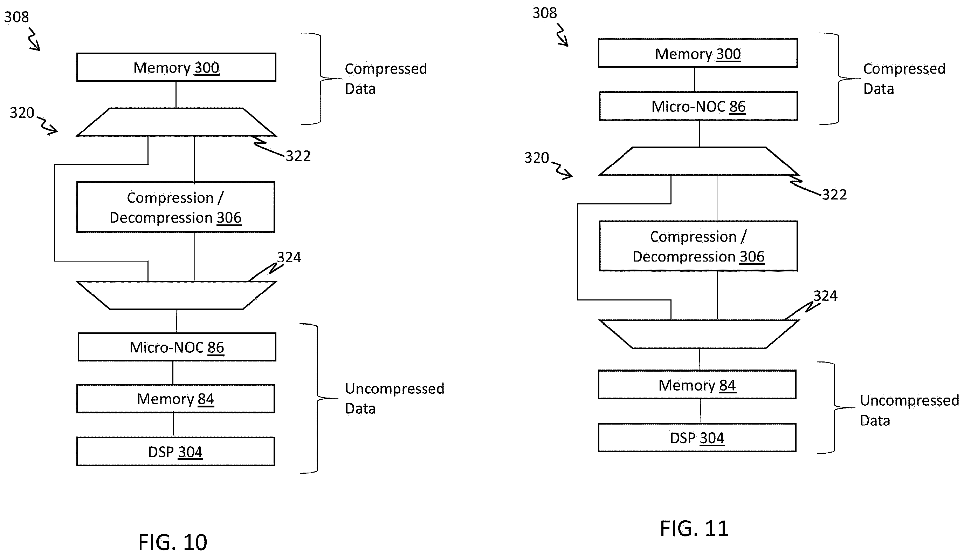

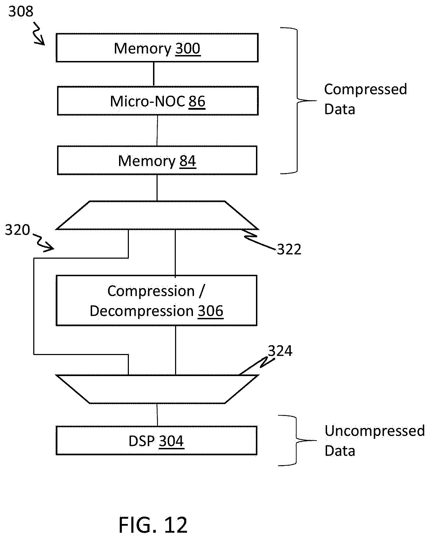

The data compression/decompression circuitry 306 may be disposed in any suitable location(s) along the data distribution network 308, as shown in FIGS. 10-12. In FIGS. 10-12, the compression/decompression circuitry 306 includes bypass circuitry 320 (e.g., multiplexers 322 and 324) to selectively compress or decompress data along the datapath of the data distribution network 308. In an example shown in FIG. 10, the data compression/decompression circuitry 306 may be disposed between the memory 300 and the micro-NOC 86. The data compression/decompression circuitry 306 may be disposed on the die of the memory 300 or may be a component of the memory controller 310. The data compression/decompression circuitry 306 may be a block within the NOC 80A or may be disposed between the NOC 80A and the micro-NOC 86 (e.g., as part of the egress of the NOC 80A, part of the ingress of the micro-NOC 86, a separate component between the NOC 80A and the micro-NOC 86). In an example shown in FIG. 11, the data compression/decompression circuitry 306 may be disposed between the micro-NOC 86 and the embedded memory block 84 (e.g., as part of the egress from the micro-NOC 86, part of the ingress to memory block 84, a separate block between the micro-NOC 86 and the memory block 84). In an example shown in FIG. 12, the data compression/decompression circuitry 306 may also be disposed between the memory block 84 and the DSP block 304 (e.g., part of the egress of memory block 84, part of the ingress to the DSP block 304, a separate block between the memory 84 and the DSP block 304 that may be a hardened circuit or formed in soft logic). Indeed, the data compression/decompression circuitry 306 may be disposed in a memory interface of the memory 300 or a memory block 84. Moreover, the NOC 80A or the micr-NOC 86 may have dedicated connections to or from soft logic (e.g., user logic in programmable logic fabric 82) of the integrated circuit 12 to enable the soft logic to include the data compression/decompression circuitry 306.

Moreover, in some cases, the data compression/decompression circuitry 306 may be disposed between circuits of the data utilization circuitry 302. For instance, there may be an instance of the data compression/decompression circuitry 306 (not shown in FIG. 9) between the DSP block 304 and the user logic in programmable logic fabric 82 or between the user logic in programmable logic fabric 82 and memory block 84 on the micro-NOC 86 connected to the user logic in programmable logic fabric 82. By way of example, the DSP block 304 may perform writeback of data through the user logic in programmable logic fabric 82 after performing some computations. The user logic in programmable logic fabric 82 may perform additional data processing before sending the data through a data compression/decompression block 306 to compress the data before sending it back along the data distribution network 308 to the memory 300.

Different use cases may call for using different placements of the data compression/decompression 306. For example, the examples of FIGS. 10-12 may be considered potential placements for encoders and decoders for an ML accelerator. The compression strategy for weight and activation can be different in the general case. For example, weights can use the option shown in FIG. 10 while activation can use the example shown in FIG. 11. Different placements achieve different performance complexity trade-offs. For example, in the example of FIG. 11, data in and out of the NOC 80 or micro-NOC 86 may be compressed. As a result, this method may increase the effective bandwidth of the NOC 80 or micro-NOC 86, increase the bandwidth to/from the memory 300, and increase the effective capacity of the memory 300. In one example, the encoder/decoder of the compression/decompression circuitry 306 that performs compression and decompression may be handled by programmable logic circuitry (e.g., user logic in programmable logic fabric 82), which may encode data into the micro-NoC 86 and decompress data out of the micro-NoC 86.

Another interesting use case goes with the option shown in FIG. 10. Compared to the option of FIGS. 11 and 12, this option would not increase the effective bandwidth of the NOC 80 or the micro-NOC 86, as the compression/decompression circuitry 306 are placed between the micro-NOC 86 and the memory 300. However, since the compression/decompression circuitry 306 is between NOC 80 and micro-NOC 86 and the memory 300, the compression/decompression circuitry 306 may be part of the memory 300 die.

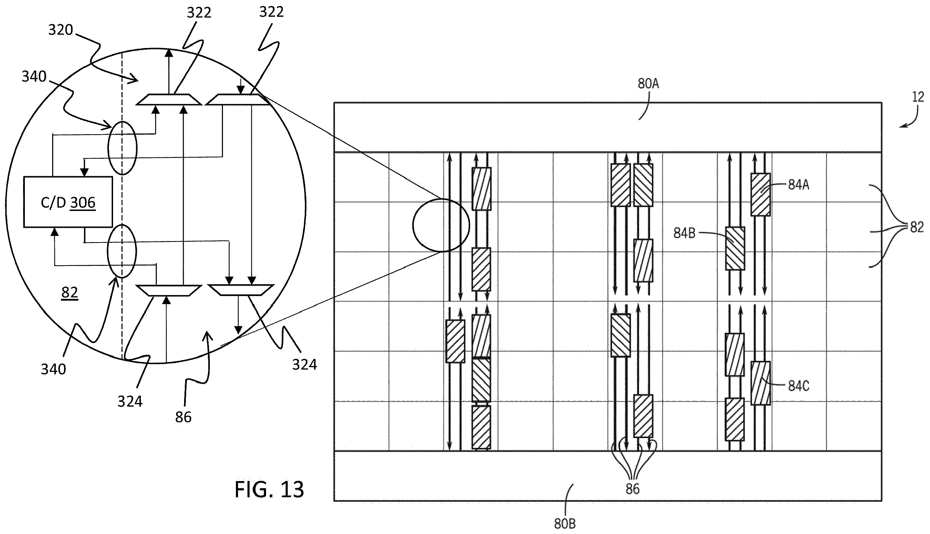

In an example shown in FIG. 13, the NOC 80 or the micro-NOC 86 may also provide ingress and egress ports 340 to the soft logic 82 of the data utilization circuitry. The ingress and egress ports 340 may provide access to compression/decompression circuitry 306 or other circuits implemented in the soft logic 82. Bypass circuitry 320 (e.g., multiplexers 322 and 324) may be disposed along the micro-NOC 86. This may allow the compression/decompression circuitry 306 or other circuits implemented in the soft logic 82 to be bypassed if desired. Moreover, this may also allow the compression/decompression circuitry 306 to perform only compression (e.g., include only an encoder in the soft logic 82) or to perform only decompression (e.g., include only a decoder in the soft logic 82). The ingress and egress ports 340 may be placed sufficiently close to one another to allow data to be rapidly offloaded to the compression/decompression circuitry 306 and to return to the micro-NOC 86. For example, the ingress and egress ports 340 may be approximately collocated (e.g., within some threshold number of logic cells or routing resources of the soft logic 82, apart approximately a distance covered by the compression/decompression circuitry 306 in the soft logic 82). While this example shows ingress and egress ports 340 along the micro-NOC 86, additionally or alternatively, the NOC 80A or 80B may include ingress and egress ports 340 to easily access compression/decompression circuitry 306 or other circuits implemented in the soft logic 82.

## Compression Schemes

The compression/decompression circuitry 306 may use any suitable form of compression. As mentioned above, these may include lossless sparse encoding, lossless multi-precision encoding, lossless 2-bit prefix lookup table-based encoding, Huffman encoding, selective compression, as well as lossy compression. Lossless algorithms may be deployed to compress both weights and activation in the compression/decompression circuitry 306 and this may be on-the-fly. One advantage is that lossless algorithms result in no numerical precision loss. Consequently, lossless algorithms have no impact on ML inference or training accuracy. One challenge of lossless compression is that the compression ratio is variable. This means that, first, since activations are computed at runtime, the compression/decompression circuitry 306 may include additional circuitry to track the start addresses of compressed blocks. For example, arbitrary indexing through an activation may be difficult. Second, the compression ratio for lossless techniques can be greater than one for some weights and activations, and this is only known at runtime.

## Lossless Sparse Encoding

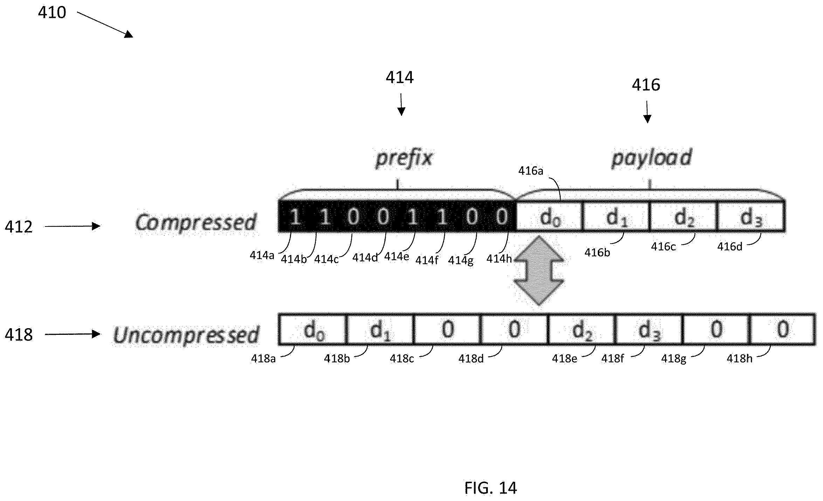

An example of a data structure 410 for lossless sparse encoding appears in FIG. 14. Using lossless sparse encoding, compressed data 412 may be defined using a prefix 414 (which may also be referred to as a mask header) and a payload 416. The prefix 414 includes a number of components, here labeled as 414a, 414b, 414c, 414d, 414e, 414f, 414g, and 414h, which indicate which values within a block are zeros. The payload 416 also includes a number of components corresponding to the components of the prefix 414, here labeled 416a, 416b, 416c, 416d. Uncompressed (e.g., decompressed) data 418 has corresponding uncompressed blocks 418a, 418b, 418c, 418d, 418e, 418f, 418g, and 418h representing blocks of data of any suitable size. For blocks of uncompressed data 418 that have all data of a particular type (e.g., all zeros, all ones, any particular common pattern other than all zeros or all ones), these blocks may be removed from the payload 416 and indicated as excluded in the header 414. Thus, the payload 416 may include components 416a, 416b, 416c, and 416d corresponding respectively to uncompressed data blocks 418a, 418b, 418e, and 418f. Uncompressed data blocks 418c, 418d, 418g, and 418h may not be transmitted because this data is all zeros. The prefix 414 may indicate the position of the components of the payload 416 in the uncompressed data 418 and which blocks of the uncompressed data 418 are all zeros (or, in other examples, all ones or particular common pattern other than all zeros or all ones). Thus, the prefix components 414a, 414b, 414e, and 414f indicate that uncompressed data blocks 418a, 418b, 418e, and 418f are contained in the payload components 416a, 416b, 416c, and 416d. The prefix components 414c, 414d, 414g, and 414h indicate that uncompressed data blocks 418c, 418d, 418g, and 418h are all zeros.

In this way, lossless sparse encoding may reduce complexity of some data compression techniques by leveraging the fact that, for many machine learning (ML) use cases, weight and activation values can be sparse (e.g., contain many zero values). Indeed, weights can be retrained to be sparse, for example, by setting near zero weights to zero and retraining the ML model to maintain classification accuracy. Moreover, activation values are naturally sparse in many networks due to the use of a rectified linear unit (ReLU) activation function, which sets all negative values to 0.

For the lossless sparse encoding scheme shown in FIG. 14, the compression ratio per block (e.g., the ratio between uncompressed case and compressed case) may be computed as:

$$m = \frac{B}{((B+1)\times(1-P)+P)}$$

where B is the number of bits used for each value in the payload and P is the percent of the zero values. The compression ratio is data dependent, and thus variable, among blocks. In addition, it is possible for the compression ratio to be greater than 1. Thus, without retraining the weights for increased sparsity, it is very possible that the probability of having a zero value in the weight will not be sufficiently large to amortize the overhead for the prefix bit. As such, lossless sparse encoding may be particularly useful for machine learning involving sparse weights.

**Lossless Multiprecision Encoding**

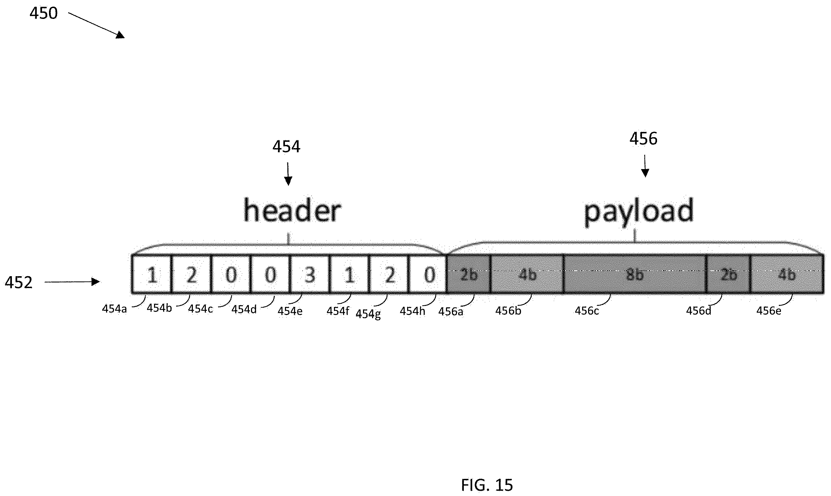

Lossless multiprecision encoding is illustrated by an example data structure 450 shown in FIG. 15. The data structure 450 of FIG. 15 illustrates one way to extend the sparse encoder described above with reference to FIG. 14 by using more than two levels for data compression. Compared to sparse encoding (where weight sparsification often involves retraining), the advantage of multi-precision encoding is that classification accuracy may be maintained without retraining to achieve sparsity. As in the data structure 410 of FIG. 14, the data structure 450 of FIG. 15 encodes values (e.g., weights or activations) block-wise. Each block still has a mask header and a payload. However, mask values are no longer binary.

One way to compress sparse data is using a mask header according to lossless sparse encoding is to compress zero values within a block. In this scheme, values (e.g., weights or activations) may be encoded block-wise, where each block of compressed data 452 has a mask header 454 and a payload 456. The mask header 454 includes components, shown here as components 454a, 454b, 454c, 454d, 454e, 454f, 454g, and 454h, that each correspond to a block of uncompressed data. Each component of the mask header 454 indicate which values within a block are zeros or are certain non-zero mask values. For non-zero mask values, the corresponding value can be found in a component of the payload 456, shown here as components 456a, 456b, 456c, 456d, and 456e.

The components of the mask header 454 each may have any suitable number of bits to provide information about the payload 456. For example, 2-bit masks may be used, where 0 indicates a zero, 1 indicates a 2-bit value, 2 indicates 4-bit value, and 3 indicates 8-bit value. Table 1 captures the intervals of signed values covered by each prefix:

**Table 1**

| Header | Range covered |
|---|---|
| 00(0-bit payload) | 0 |
| 01(2-bit payload) | [-2, -1] ∪ 1 |
| 10(4-bit payload) | [-8, -3] ∪ [2,7] |
| 11(8-bit payload) | [-128, -9] ∪ [8,127] |

Ranges of signed 8-bit values covered by different prefixes

Like sparse encoding, the compression ratio can be greater than 1 and the compression ratio is variable. Due to direct mapping between the payload and uncompressed value, a subset of the maximal interval can be covered in each prefix. For example, as seen in Table 1, even though prefix 01 has the capability to cover the interval [-8, 7] due to having a 4-bit payload, it ends up covering 75% of this interval ([-8, -3] ∪ [2, 7]) since prefix 00 and 01 already cover the interval [-2, 1]. Moreover, the intervals assigned to have payloads with fewer bits may not correspond to higher value probabilities since the mapping is agnostic to the probability distribution.

**Lossless Prefix Lookup Table-Based Encoding**

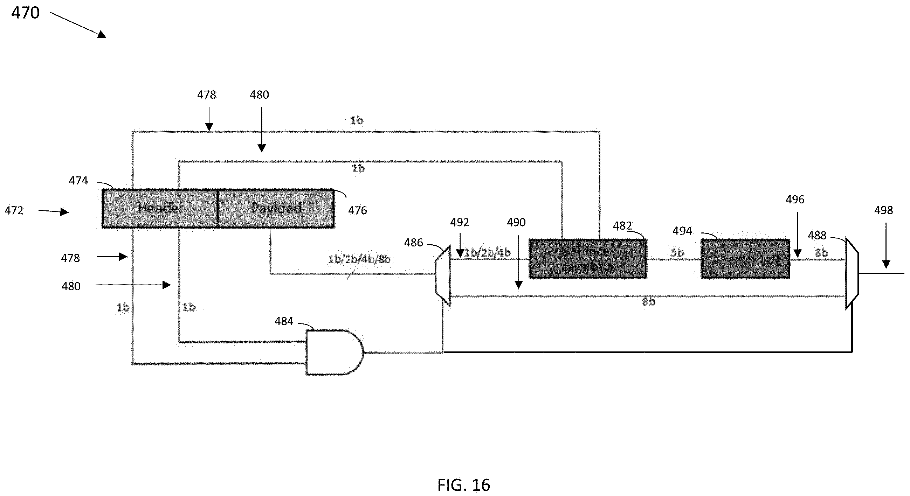

Lossless prefix lookup table-based encoding may address these concerns. With lossless prefix lookup table-based encoding, a lookup table may be populated to output with the highest-frequency data blocks corresponding to the smallest payloads. As discussed below, a 2-bit prefix look-up table (LUT) based encoding may be used to target int8 weights. One example of lossless prefix lookup table-based encoding is shown by a compression/decompression system 470 of FIG. 16. The system 470 may use a data structure 472 that includes a mask header 474 containing 2-bit entries corresponding to each block of a payload 476. In other examples, however, the mask header 474 may include more bits than 2 for each mask header entry. A first header bit 478 and a second header bit 480 of the mask header 474 may be decoded by lookup table (LUT) index calculator circuitry 482. The first header bit 478 and the second header bit 480 of the mask header 474 may also enter an AND logic gate 484 to generate a selection signal to control multiplexer circuitry 486 and 488. When the first header bit 478 and the second header bit 480 of the mask header 474 are both 1, the multiplexers 486 and 488 may pass the current block of the payload 476 out as uncompressed data 490. By way of example, the size of the current block of the payload 476 may be 8 bits when the first header bit 478 and the second header bit 480 of the mask header 474 are both 1. When the first header bit 478 and the second header bit 480 of the mask header 474 are not both 1, the multiplexer 486 may pass the current block 492 of the payload 476 as an index to the LUT-index calculator circuitry 482. The LUT-index calculator circuitry 482 may use the values of the first header bit 478 and the second header bit 480 of the mask header 474 to determine the size of the current block of the payload 476 (e.g., 1 bit, 2 bits, 4 bits) and generate a lookup table index to send to a lookup table (LUT) 494.

The LUT 494 may have any suitable number of entries. In the example of FIG. 16, the LUT 494 has 22 entries. Based on the index output by the LUT-index calculator circuitry 482, the LUT 494 outputs uncompressed data 496 (e.g., an 8-bit entry corresponding to uncompressed data). The uncompressed data 496 or 490 may be selected depending on the mask header 474 and output as uncompressed data 498. In the example of FIG. 16, the LUT-index calculator circuitry 482 may output a 5-bit lookup table index based on the two bits 478 and 480 of the mask header 474 according to Table 2 below:

**Table 2**

| Header | LUT indices |
| --- | --- |
| 00(1-bit payload) | [0,1] |
| 01(2-bit payload) | [2,5] |
| 10(4-bit payload) | [6,21] |
| 11(8-bit payload) | N/A |

Ranges of signed 8-bit values covered by different prefixes

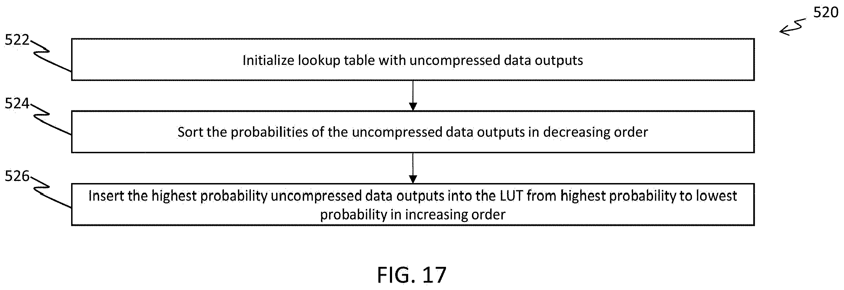

A flowchart 520 of FIG. 17 illustrates one method for instantiating the LUT 494. The method of the flowchart 520 may take place at runtime or when generating the system design for the integrated circuit 12. For example, the method of the flowchart 520 may be carried out by software running on a host in communication with the integrated circuit 12, in programmable logic circuitry configured to perform the method of the flowchart 520, or initially in design software (e.g., based on weights known in advance). At block 522, a the LUT 494 may be instantiated to hold uncompressed data outputs (e.g., a 22-entry LUT with int8 outputs). At block 524, the uncompressed data outputs may be sorted in decreasing order. For example, weights may be known in advance and activations may be reasonably estimated, and these values may be sorted from the highest probability to lowest probability (e.g., highest frequency to lowest frequency). At block 526, the sorted values may be inserted as entries into the LUT 494. For example, the 22 int8 weights or activations that have the highest probability may be inserted into the LUT 494 from highest probability to lowest probability in increasing order (e.g., highest probability int8 symbol is inserted in index 0, 22nd highest probability is inserted in index 21).

In this example, returning to the example of FIG. 16, a prefix 00 of the mask header 474 is succeeded by a 1-bit payload 476. The 1-bit payload 476 is used to index entries [0,1] in the LUT 494. A prefix 01 of the mask header 474 is succeeded by a 2-bit payload 476. The 2-bit payload 476 is used to index entries [2,5] in the LUT 494. A prefix 10 of the mask header 474 is succeeded by a 4-bit payload 476. The 4-bit payload 476 is used to index entries [6,21] in the LUT 494. A prefix 11 of the mask header 474 is succeeded by an 8-bit payload 476. The LUT 494 is bypassed for this prefix and the payload 476 contains the actual int8 symbol, which could be any of the least probable 234 weights.

In neural networks, the weights or activations of different layers have different probability distributions. Therefore, better compression can be achieved by updating the 22-entry LUT on a per-layer basis. Since the number of weights or activations in each layer is typically several tens of kilobytes, the overhead from updating a 22-byte LUT on a per-layer basis would be much smaller relative to the weight transfer.

Compared to lossless multi-precision encoding and zero-value compression, using 2-bit prefix LUT-based encoding may increase implementation complexity due to the added LUT 494 and LUT index calculator 482. However, higher compression ratios may be achieved thanks to the lower-bit payloads 476 being assigned to the higher probabilities and the LUT 494 adapting to each layer's weight or activation probability distribution.

**Other Compression Schemes**

Other compression schemes may be used. For example, Huffman compression may be used to generate an optimal prefix code for a given probability distribution. At a high level, it achieves this by sorting the probabilities in decreasing order and assigning the shorter codewords to higher probabilities. One advantage of Huffman coding is that it can closely approach the best possible compression rates. Its biggest disadvantage is its complexity; for example, for int8 symbols there may be 256 leaf nodes and the corresponding Huffman coding tree would be greater than 8.

Selective compression may also be used. One of the main issue of lossless compression is that, in the case where all values *B* would be encoded using exactly *B* bits, the encoded block can be bigger than the unencoded case. One option is to use an additional bitfield for each payload. In the case where encoded block is bigger than the unencoded case, the bit field may be set to a particular state (e.g., 0) and the unencoded data may be stored without encoding. In the case where encoded block is smaller than the encoded case, the bit field may be set to the other state (e.g., 1) the encoded data may be stored. This may ensure that the compression ratio is 1 in the worst case.

Lossy algorithms can also be deployed to compress both weights and activation. One advantage of lossy algorithms is that they may have a deterministic compression ratio. Consequently, arbitrary index through an activation may be done using simple address computation. However, lossy compression algorithms result in numerical precision loss. Consequently, maintaining ML network accuracy may entail retraining.

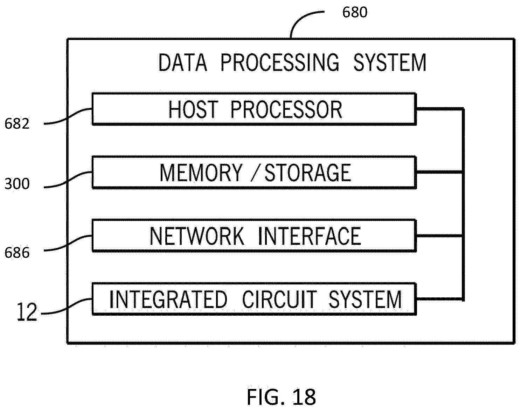

The integrated circuit device 12 may be a part of a data processing system or may be a component of a data processing system that may benefit from use of the techniques discussed herein. For example, the integrated circuit device 12 may be a component of a data processing system 680, shown in FIG. 18. The data processing system 680 includes a host processor 682, memory and/or storage circuitry 300, a network interface 686, and the integrated circuit 12. The data processing system 680 may include more or fewer components (e.g., electronic display, user interface structures, application specific integrated circuits (ASICs)).

The host processor 682 may include any suitable processor, such as an INTEL® XEON® processor or a reduced-instruction processor (e.g., a reduced instruction set computer (RISC), an Advanced RISC Machine (ARM) processor) that may manage a data processing request for the data processing system 680 (e.g., to perform machine learning, video processing, voice recognition, image recognition, data compression, database search ranking, bioinformatics, network security pattern identification, spatial navigation, or the like). The memory and/or storage circuitry 300 may include random-access memory (RAM), read-only memory (ROM), one or more hard drives, flash memory, or the like. The memory and/or storage circuitry 300 may be considered external memory to the integrated circuit device 12 and may hold data to be processed by the data processing system 680 and/or may be internal to the integrated circuit device 12. In some cases, the memory and/or storage circuitry 300 may also store configuration programs (e.g., bitstream) for programming a programmable fabric of the integrated circuit device 12. The network interface 686 may permit the data processing system 680 to communicate with other electronic devices. The data processing system 680 may include several different packages or may be contained within a single package on a single package substrate. For example, components of the data processing system 680 may be located on several different packages at one location (e.g., a data center) or multiple locations. For instance, components of the data processing system 680 may be located in separate geographic locations or areas, such as cities, states, or countries.

In one example, the data processing system 680 may be part of a data center that processes a variety of different requests. For instance, the data processing system 680 may receive a data processing request via the network interface 686 to perform machine learning, video processing, voice recognition, image recognition, data compression, database search ranking, bioinformatics, network security pattern identification, spatial navigation, or some other specialized task. The host processor 682 may cause a programmable logic fabric of the integrated circuit device 12 to be programmed with a particular accelerator related to requested task. For instance, the host processor 682 may instruct that configuration data (bitstream) be stored on the memory and/or storage circuitry 300 or cached in sector-aligned memory of the integrated circuit device 12 to be programmed into the programmable logic fabric of the integrated circuit device 12. The configuration data (bitstream) may represent a circuit design for a particular accelerator function relevant to the requested task.

The processes and devices of this disclosure may be incorporated into any suitable circuit. For example, the processes and devices may be incorporated into numerous types of devices such as microprocessors or other integrated circuits. Example integrated circuits include programmable array logic (PAL), programmable logic arrays (PLAs), field programmable logic arrays (FPLAs), electrically programmable logic devices (EPLDs), electrically erasable programmable logic devices (EEPLDs), logic cell arrays (LCAs), field programmable gate arrays (FPGAs), application specific standard products (ASSPs), application specific integrated circuits (ASICs), and microprocessors, just to name a few.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

**Example Embodiments of the Disclosure**

The following numbered clauses define certain example embodiments of the present disclosure.

EXAMPLE EMBODIMENT 1. An integrated circuit device comprising:

first memory to store data;
data utilization circuitry to operate on the data;
a configurable data distribution path to transfer data between the first memory and the data utilization circuitry; and
compression and decompression circuitry disposed along the data distribution path between the first memory and the data utilization circuitry to enable the first memory to store the data in compressed form and to enable the data utilization circuitry to operate on the data in uncompressed form.

EXAMPLE EMBODIMENT 2. The integrated circuit device of example embodiment 1, wherein the data distribution path comprises a first network-on-chip (NOC) on the integrated circuit device to transmit the data from the first memory toward the data utilization circuitry.

EXAMPLE EMBODIMENT 3. The integrated circuit device of example embodiment 2, wherein the compression and decompression circuitry is disposed between the first memory and the first network-on-chip (NOC).

EXAMPLE EMBODIMENT 4. The integrated circuit device of example embodiment 2, wherein the compression and decompression circuitry is disposed between the first network-on-chip (NOC) and the data utilization circuitry.

EXAMPLE EMBODIMENT 5. The integrated circuit device of example embodiment 2, wherein the data distribution path comprises a second network-on-chip (NOC) on the integrated circuit device of a different width than the first network-on-chip (NOC).

EXAMPLE EMBODIMENT 6. The integrated circuit device of example embodiment 2, wherein the data distribution path comprises embedded memory coupled to the first network-on-chip (NOC), wherein the compression and decompression circuitry is disposed between the embedded memory and the first network-on-chip (NOC).

EXAMPLE EMBODIMENT 7. The integrated circuit device of example embodiment 2, wherein the first network-on-chip (NOC) is formed from hardened circuitry.

EXAMPLE EMBODIMENT 8. The integrated circuit device of example embodiment 2, wherein the compression and decompression circuitry is formed in programmable logic circuitry of the integrated circuit device and the first network-on-chip (NOC) comprises ingress and egress ports to the programmable logic circuitry to provide access to the compression and decompression circuitry.

EXAMPLE EMBODIMENT 9. The integrated circuit device of example embodiment 8, wherein the ingress and egress ports are substantially collocated with one another and with respect to the compression and decompression circuitry.

EXAMPLE EMBODIMENT 10. The integrated circuit device of example embodiment 1, wherein the compression and decompression circuitry is bypassable.

EXAMPLE EMBODIMENT 11. The integrated circuit device of example embodiment 1, wherein the data utilization circuitry comprises a digital signal processing circuit.

EXAMPLE EMBODIMENT 12. The integrated circuit device of example embodiment 1, wherein the data utilization circuitry comprises programmable logic circuitry configurable to be programmed with a user system design.

EXAMPLE EMBODIMENT 13. The integrated circuit device of example embodiment 1, wherein the integrated circuit device comprises a multi-die package and the first memory is disposed on a different die than the data utilization circuitry.

EXAMPLE EMBODIMENT 14. The integrated circuit device of example embodiment 1, wherein the compression and decompression circuitry uses lossless sparse encoding.

EXAMPLE EMBODIMENT 15. The integrated circuit device of example embodiment 1, wherein the compression and decompression circuitry uses lossless multiprecision encoding.

EXAMPLE EMBODIMENT 16. The integrated circuit device of example embodiment 1, wherein the compression and decompression circuitry uses Huffman encoding.

EXAMPLE EMBODIMENT 17. The integrated circuit device of example embodiment 1, wherein the compression and decompression circuitry uses lossless prefix lookup table-based encoding.

EXAMPLE EMBODIMENT 18. The integrated circuit device of example embodiment 1, comprising second compression and decompression circuitry disposed along the data distribution path, wherein the compression and decompression circuitry uses a first form of encoding and the second compression and decompression circuitry uses a second form of encoding.

EXAMPLE EMBODIMENT 19. An integrated circuit system comprising:

data utilization circuitry to operate on data in uncompressed form;
memory to store the data in compressed form; and
decompression circuitry to decompress the data using lossless prefix lookup table-based encoding before the data reaches the data utilization circuitry.

EXAMPLE EMBODIMENT 20. The system of example embodiment 19, wherein the decompression circuitry is disposed in an interface of the memory.

EXAMPLE EMBODIMENT 21. The system of example embodiment 19, wherein:

the data utilization circuitry is disposed on a first die;
the memory is disposed on a second die; and
the decompression circuitry is disposed on the second die.

EXAMPLE EMBODIMENT 22. The system of example embodiment 19, comprising compression circuitry to compress data to be stored in the memory using lossless prefix lookup table-based encoding.

EXAMPLE EMBODIMENT 23. The system of example embodiment 19, wherein the data utilization circuitry comprises a plurality of embedded function circuits and wherein the decompression circuitry is connected between two of the plurality of embedded function circuits.

EXAMPLE EMBODIMENT 24. One or more tangible, non-transitory, machine-readable media comprising instructions that, when executed by one or more processors, cause the one or more processors to perform the following operations:

initiating a lookup table to store uncompressed data;
sorting an expected frequency of the uncompressed data in decreasing order; and
inserting the uncompressed data as entries into the lookup table from highest expected frequency to lowest expected frequency in increasing order to generate a lookup table of lossless prefix lookup table-based encoding.

EXAMPLE EMBODIMENT 25. A compression circuit comprising:

a lookup table index calculator to generate a lookup table index based on a multi-bit mask header and a payload from compressed data; and
a lookup table to store uncompressed data indexed to the lookup table index.

EXAMPLE EMBODIMENT 26. The compression circuit of example embodiment 25, wherein the multi-bit mask header comprises 2 bits, the payload comprises 1 bit when the multi-bit mask header has a first value, 2 bits when the multi-bit mask header has a second value, and 4 bits when the multi-bit mask header has a third value.

EXAMPLE EMBODIMENT 27. The compression circuit of example embodiment 26, wherein the lookup table comprises at least 22 entries.

## Claims

1. An integrated circuit device comprising:

   first memory to store data;
   data utilization circuitry to operate on the data;
   a configurable data distribution path to transfer data between the first memory and the data utilization circuitry; and
   compression and decompression circuitry disposed along the data distribution path between the first memory and the data utilization circuitry to enable the first memory to store the data in compressed form and to enable the data utilization circuitry to operate on the data in uncompressed form.

2. The integrated circuit device of claim 1, wherein the data distribution path comprises a first network-on-chip (NOC) on the integrated circuit device to transmit the data from the first memory toward the data utilization circuitry.

3. The integrated circuit device of claim 2, wherein the compression and decompression circuitry is disposed between the first memory and the first network-on-chip (NOC).

4. The integrated circuit device of claim 2, wherein the compression and decompression circuitry is disposed between the first network-on-chip (NOC) and the data utilization circuitry.

5. The integrated circuit device of any of claims 2-4, wherein the data distribution path comprises a second network-on-chip (NOC) on the integrated circuit device of a different width than the first network-on-chip (NOC).

6. The integrated circuit device of any of claims 2-5, wherein the data distribution path comprises embedded memory coupled to the first network-on-chip (NOC), wherein the compression and decompression circuitry is disposed between the embedded memory and the first network-on-chip (NOC).

7. The integrated circuit device of any of claims 2-6, wherein the first network-on-chip (NOC) is formed from hardened circuitry.

8. The integrated circuit device of any of claims 2-7, wherein the compression and decompression circuitry is formed in programmable logic circuitry of the integrated circuit device and the first network-on-chip (NOC) comprises ingress and egress ports to the programmable logic circuitry to provide access to the compression and decompression circuitry.

9. The integrated circuit device of claim 8, wherein the ingress and egress ports are substantially collocated with one another and with respect to the compression and decompression circuitry.

10. The integrated circuit device of any of claims 1-9, wherein the compression and decompression circuitry is bypassable.

11. The integrated circuit device of any of claims 1-10, wherein the data utilization circuitry comprises a digital signal processing circuit or programmable logic circuitry configurable to be programmed with a user system design or a combination thereof.

12. The integrated circuit device of any of claims 1-11, wherein the integrated circuit device comprises a multi-die package and the first memory is disposed on a different die than the data utilization circuitry.

13. The integrated circuit device of any of claims 1-12, wherein the compression and decompression circuitry uses lossless sparse encoding, lossless multiprecision encoding, Huffman encoding, or lossless prefix lookup table-based encoding, or any combination thereof.

14. The integrated circuit device of any of claims 1-13, comprising second compression and decompression circuitry disposed along the data distribution path, wherein the compression and decompression circuitry uses a first form of encoding and the second compression and decompression circuitry uses a second form of encoding.

15. One or more tangible, non-transitory, machine-readable media comprising instructions that, when executed by one or more processors, cause the one or more processors to perform the following operations:

initiating a lookup table to store uncompressed data;
sorting an expected frequency of the uncompressed data in decreasing order; and
inserting the uncompressed data as entries into the lookup table from highest expected frequency to lowest expected frequency in increasing order to generate a lookup table of lossless prefix lookup table-based encoding.

FIG. 1

FIG. 2

FIG. 3

FIG. 4

FIG. 5

FIG. 6

EP 4 345 637 A1

FIG. 7

EP 4 345 637 A1

22

FIG. 8

EP 4 345 637 A1

FIG. 9

EP 4 345 637 A1

308

Memory 300

Compressed
Data

320

322

Compression /
Decompression 306

324

Micro-NOC 86

Memory 84

Uncompressed
Data

DSP 304

FIG. 10

308

Memory 300

Compressed
Data

Micro-NOC 86

320

322

Compression /
Decompression 306

324

Memory 84

Uncompressed
Data

DSP 304

FIG. 11

FIG. 12

FIG. 13

EP 4 345 637 A1

FIG. 14

EP 4 345 637 A1

450

454

header

456

payload

452

| 1 | 2 | 0 | 0 | 3 | 1 | 2 | 0 | 2b | 4b | 8b | 2b | 4b |

454a 454b 454c 454d 454e 454f 454g 454h 456a 456b 456c 456d 456e

FIG. 15

FIG. 16

520

Initialize lookup table with uncompressed data outputs

522

Sort the probabilities of the uncompressed data outputs in decreasing order

524

Insert the highest probability uncompressed data outputs into the LUT from highest probability to lowest probability in increasing order

526

FIG. 17

EP 4 345 637 A1

680

DATA PROCESSING SYSTEM

682 — HOST PROCESSOR

300 — MEMORY / STORAGE

686 — NETWORK INTERFACE

12 — INTEGRATED CIRCUIT SYSTEM

FIG. 18

Europäisches
Patentamt

European
Patent Office

Office européen
des brevets

# EUROPEAN SEARCH REPORT

**Application Number**

EP 23 18 5822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/095561 A1 (WEGENER ALBERT W [US]) 3 April 2014 (2014-04-03) * abstract * * figures 7, 10-14 * * paragraph [0009] - paragraph [0039] * * paragraph [0078] - paragraph [0105] * | 1-15 | INV. G06F15/78 G06F3/06 |
| X | REETUPARNA DAS ET AL: "Performance and power optimization through data compression in Network-on-Chip architectures", HIGH PERFORMANCE COMPUTER ARCHITECTURE, 2008. HPCA 2008. IEEE 14TH INTERNATIONAL SYMPOSIUM ON, IEEE, PISCATAWAY, NJ, USA, 16 February 2008 (2008-02-16), pages 215-225, XP031353635, ISBN: 978-1-4244-2070-4 * the whole document * | 1-15 | |
| X | US 2013/138918 A1 (MUFF ADAM J [US] ET AL) 30 May 2013 (2013-05-30) * abstract * * figures 1-3, 6, 7, 8 * * paragraph [0004] - paragraph [0006] * * paragraph [0022] - paragraph [0060] * * paragraph [0065] - paragraph [0072] * | 1-15 | TECHNICAL FIELDS SEARCHED (IPC) G06F |

The present search report has been drawn up for all claims

| Place of search | Date of completion of the search | Examiner |
|---|---|---|
| The Hague | 14 February 2024 | Wirtz, Hanno |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 23 18 5822

14-02-2024

| Patent document cited in search report | | Publication date | Patent family member(s) | | Publication date |
|---|---|---|---|---|---|
| US 2014095561 | A1 | 03-04-2014 | CN | 102754078 A | 24-10-2012 |
| | | | EP | 2483777 A2 | 08-08-2012 |
| | | | JP | 2013506917 A | 28-02-2013 |
| | | | KR | 20120098628 A | 05-09-2012 |
| | | | US | 2011078222 A1 | 31-03-2011 |
| | | | US | 2014095561 A1 | 03-04-2014 |
| | | | WO | 2011041269 A2 | 07-04-2011 |
| US 2013138918 | A1 | 30-05-2013 | NONE | | |

EPO FORM P0459